# EUROPÄISCHE PATENTSCHRIFT

(11) **EP 2 952 420 B1**
(45) Veröffentlichungstag und Bekanntmachung des Hinweises auf die Patenterteilung: **30.11.2016**
(21) Anmeldenummer: 15170019.2
(22) Anmeldetag: 01.06.2015
(51) Int. Cl.: B62D 55/088, B62D 55/108

(54) **VORRICHTUNG ZUM VERBINDEN ZWEIER FAHRWERKSTEILE EINES MILITÄRISCHEN FAHRZEUGS**
DEVICE FOR CONNECTING TWO SUSPENSION ELEMENTS OF A MILITARY VEHICLE
DISPOSITIF DE LIAISON DE DEUX PARTIES DE CHÂSSIS D'UN VÉHICULE MILITAIRE

(30) Priorität: 04.06.2014 DE 102014107904
(43) Veröffentlichungstag der Anmeldung: 09.12.2015
(73) Patentinhaber: Krauss-Maffei Wegmann GmbH & Co. KG, 80997 München (DE)
(72) Erfinder: Hinse-Stern, Dr. Axel, 80997 München (DE); Wittmann, Christoph, 80997 München (DE); Schwippl, Christian, 80997 München (DE)
(74) Vertreter: Feder Walter Ebert

(56) Entgegenhaltungen:
- WO-A1-89/11993
- WO-A1-2007/087924
- DE-A1- 1 808 702
- GB-A- 528 280
- US-A- 2 465 098
- US-A- 4 172 591

## Beschreibung

Die Erfindung betrifft eine Vorrichtung zum Verbinden zweier Fahrwerksteile, insbesondere zweier Kettenlaufwerke, mit einer in einem beidseitig offenen Kanal bewegbar angeordneten Strebe. Ferner betrifft die Erfindung ein militärisches Fahrzeug mit einer die Fahrzeugbesatzung aufnehmenden Wanne und zwei seitlich der Wanne angeordneten Fahrwerksteilen.

Derartige Vorrichtungen werden häufig in militärischen Fahrzeugen eingesetzt und dienen beispielsweise dazu, zwei seitlich an einer die Fahrzeugbesatzung aufnehmenden Wanne angeordnete Fahrwerksteile, wie etwa zwei Kettenlaufwerke miteinander zu verbinden.

Über die Streben können Zug- und Druckkräfte zwischen den Fahrwerksteilen übertragen werden, welche beispielsweise bei Kurvenfahrten auftreten. Die Streben werden dabei häufig durch einen Kanal geführt, was aufgrund der konstruktiven Gegebenheiten oder durch Sicherheitsaspekte bedingt ist. Da zumeist das gesamte Fahrwerk gegenüber der Wanne schwingungsentkoppelt ist, ist es erforderlich, dass sich die Strebe innerhalb des Kanals bewegen kann. Daher wird in der Regel zwischen der Strebe und der Innenwand des Kanals ein für die Bewegung der Strebe ausreichender Raum innerhalb des Kanals vorgesehen.

Um ein Eindringen von Schmutz in diesen Raum zu verhindern, werden oftmals Dichtungen vorgesehen. Allerdings können derartige Dichtungen das Eindringen von Schmutz in den Kanal nur in begrenztem Ausmaß verhindern, was beispielsweise durch die zum Teil sehr langen Missionsdauern der Fahrzeuge, missionsspezifisch stark unterschiedliche Verschmutzungsarten von eher lehmigen Verunreinigungen bis hin zu sehr feinkörnigen Stäuben, größeren Temperaturschwankungen, usw. bedingt ist. Insbesondere feinkörnige Verschmutzungen lassen sich im Grunde genommen kaum aus dem Kanal fern halten. Im schlimmsten Fall können sie den Raum zwischen Strebe und Kanal zusetzen, so dass die Bewegung der Strebe innerhalb des Kanals behindert wird und es unter Umständen sogar zu einer Zerstörung der Strebe kommen kann.

Es ist daher erforderlich, die Strebe von Zeit zu Zeit zu reinigen, beispielsweise im Rahmen von regelmäßig durchgeführten Wartungen des Fahrzeugs. Es hat sich in diesem Zusammenhang als nachteilig herausgestellt, dass die Vorrichtung nahezu vollständig demontiert und insbesondere die Strebe zur Reinigung vollständig aus dem Kanal entnommen werden muss, so dass sich die Reinigung insgesamt sehr aufwändig gestaltet.

Ein derartiger Kanal mit einer darin bewegten schmutzbefallenen Torsionsstrebe ist durch die WO89/11993 bekannt.

Vor diesem Hintergrund stellt sich die Erfindung die **Aufgabe**, eine wartungsfreundliche Vorrichtung anzugeben.

Bei einer Vorrichtung der eingangs genannten Art, wird die Aufgabe durch einen zumindest teilweise innerhalb des Kanals angeordneten Abstreifer zum Abstreifen von Verschmutzungen von der Strebe **gelöst**.

Der Abstreifer kann mit der Strebe derart zusammenwirken, dass bei Bewegungen der Strebe gegenüber dem Kanal Verschmutzungen von der Strebe entfernt werden. Aufgrund der Anordnung des Abstreifers zumindest teilweise innerhalb des Kanals können von der Strebe abgestreifte Verschmutzungen zu den Endbereichen des Kanals abgeführt werden, wo sie im Rahmen von Wartungsarbeiten auf einfache Weise entfernt werden können. Es ist nicht erforderlich, die gesamte Vorrichtung zu demontieren und insbesondere nicht, die Strebe aus dem Kanal zu entfernen.

Gemäß einer vorteilhaften Ausgestaltung der Vorrichtung ist der Abstreifer in einem Endbereich des Kanals angeordnet. Die Anordnung des Abstreifers im Endbereich des Kanals bringt den Vorteil mit sich, dass Verschmutzungen der Strebe bereits im Endbereich des Kanals von der Strebe entfernt werden können. Das Eindringen von Verschmutzungen in den zwischen den Endbereichen des Kanals liegenden Mittelbereich des Kanals kann daher weitestgehend vermieden werden.

Bevorzugt ist der Abstreifer an einer Innenseite des Kanals festgelegt. Bei Bewegungen der Strebe gegenüber dem Kanal kann der kanalseitig festgelegte Abstreifer derart mit der Strebe zusammenwirken, dass Verschmutzungen von der Strebe gelöst werden.

Besonders bevorzugt ist eine Ausgestaltung, bei welcher der Abstreifer an der Strebe anliegt, so dass bei Bewegung der Strebe Verschmutzungen durch den Abstreifer von der Strebe abgewischt werden können.

Als vorteilhaft hat sich in diesem Zusammenhang eine Ausgestaltung erwiesen, bei welcher der Abstreifer eine Dichtlippe aufweist, über welche der Abstreifer an der Strebe anliegt. Über die Dichtlippe kann ein dichtender Sitz des Abstreifers auf der Strebe erreicht werden, so dass selbst in einer Flüssigkeit gelöste Verunreinigungen den Abstreifer nicht passieren können, sondern im für Wartungsarbeiten gut zugänglichen Endbereich des Kanals gehalten werden.

Vorteilhaft ist es ferner, wenn der Abstreifer aus einem elastischen Material besteht. Der elastische Abstreifer kann beispielsweise gegen die Strebe elastisch vorgespannt sein und sich bei Bewegung der Strebe derart verformen, dass dieser unabhängig von den Bewegungen der Strebe stets in Kontakt mit dieser bleibt.

Eine besonders vorteilhafte Ausgestaltung der Erfindung sieht vor, dass die Vorrichtung mindestens einen weiteren Abstreifer aufweist, so dass Verschmutzungen an mehreren Stellen von der Strebe abgestreift werden können.

Die Abstreifer können in gegenüberliegenden Endbereichen des Kanals angeordnet sein, so dass der Kanal gegen von beiden Endbereichen eindringende Verschmutzungen geschützt werden kann.

Bei einer Vorrichtung, die in gegenüberliegenden Endbereichen des Kanals angeordnete Abstreifer aufweist, hat es sich als vorteilhaft herausgestellt, wenn zwischen den Abstreifern ein Füllstoff angeordnet ist. Durch den Füllstoff kann verhindert werden, dass sich Verschmutzungen im Bereich zwischen den Abstreifern ablagern. Der Füllstoff kann beispielsweise nach Art eines Schaumstoffs, insbesondere eines geschlossenporigen Schaumstoffs, elastisch ausgebildet sein, so dass die Beweglichkeit der Strebe durch den Füllstoff kaum bzw. nur in geringem Ausmaß beeinflusst wird.

Alternativ oder zusätzlich können mehrere Abstreifer in demselben Endbereich des Kanals angeordnet sein, wobei die Abstreifer aus verschiedenen Richtungen an der Strebe angreifen, so dass Verschmutzungen von verschiedenen Seiten der Strebe entfernt werden können.

Sind mehrere Abstreifer vorhanden, so kann ein Abstreifer oberhalb der Strebe und ein Abstreifer unterhalb der Strebe angeordnet sein, so dass die Strebe durch die beiden Abstreifer hindurchgeführt ist und Verschmutzungen von der Oberseite und der Unterseite der Strebe abgestreift werden können.

Eine vorteilhafte Ausgestaltung sieht vor, dass zwischen dem Abstreifer und der Strebe ein sich zu einer Kanalöffnung hin öffnender Freiraum vorgesehen ist. Der Freiraum kann als eine Art Sammelpunkt für die abgestreiften Verunreinigungen dienen. Der Freiraum kann ferner zur Anordnung eines an der Strebe angreifenden Elements genutzt werden, wobei das Element durch die Kanalöffnung in den Kanal eingebracht werden kann.

Besonders vorteilhaft ist es, wenn ein Abstreifer oder mehrere Abstreifer gemeinsam einen sich zu einer Kanalöffnung hin öffnenden Trichter bilden. Von der Strebe abgestreifte Verschmutzungen können entlang der schrägen Innenseite des Trichters in Richtung der Kanalöffnung gelangen. Die Verschmutzungen können dann durch die Kanalöffnung aus dem Kanal austreten.

Bevorzugt sind ein Abstreifer oder mehrere Abstreifer keilförmig ausgebildet. Durch die Keilform des Abstreifers können abgestreifte Verschmutzungen entlang der schrägen Seite des Abstreifers aufgrund deren Gewichtskraft bzw. der im Fahrbetrieb auftretenden Kräfte und Erschütterungen von der Strebe weg geführt werden.

Konstruktiv vorteilhaft ist eine Ausgestaltung, bei welcher der Abstreifer den Querschnitt eines rechtwinkligen Dreiecks aufweist. Ein innenliegender Endpunkt der Hypotenuse des Dreiecks kann an der Strebe und ein außenliegender Endpunkt der Hypotenuse kann an der Innenwand des Kanals anliegen. Somit kann durch die von der Hypotenuse aufgespannte Fläche eine Schräge innerhalb des Kanals gebildet werden, die das Austreten von Verschmutzungen fördert.

Gemäß einer alternativen Ausgestaltung kann vorgesehen sein, dass die Strebe durch eine Öffnung des die Strebe umschließenden Abstreifers hindurch geführt ist, wodurch sich der Vorteil ergibt, dass Verschmutzungen von allen Seiten der Strebe abgestreift werden können.

Bevorzugt weist der Kanal und/oder die Fahrwerksstrebe und/oder der Abstreifer einen rechteckigen, insbesondere quadratischen, Querschnitt auf. Durch die Wahl eines rechteckigen bzw. quadratischen Querschnitts kann die Strebe mit einer hohen Materialstärke bei nur geringer Bauhöhe ausgeführt werden, wodurch sich die Vorrichtung auch in beengten Einbausituationen nutzen lässt.

Eine vorteilhafte Ausgestaltung der Vorrichtung sieht ein dem Abstreifer vorgeschaltetes Dichtelement, insbesondere eine Balgabdichtung, zur Abdichtung des Kanals vor. Das Dichtelement kann zumindest teilweise in einem sich zwischen dem Abstreifer der Strebe erstreckenden Freiraum angeordnet sein, welcher sich zu einer Kanalöffnung hin öffnet, so dass der Kanal gegen das Eindringen größerer Verschmutzungen abgedichtet ist. Sollten kleinere Schmutzpartikel das Dichtelement durchdringen, können diese durch den Abstreifer von der Strebe entfernt werden und sich ggf. in dem Bereich zwischen dem Abstreifer und dem Dichtelement ansammeln, wo sie bei Wartungsarbeiten auf einfache Weise entfernt werden können.

Hierbei hat es sich als besonders vorteilhaft erwiesen, wenn ein Ende des Dichtelements an einer Stirnseite des Kanals und ein anderes Ende des Dichtelements an der Strebe in dem Freiraum angeordnet ist. Das Dichtelement kann die Kanalöffnung gegen das Eindringen von Verschmutzungen abdichten, ohne dass die Beweglichkeit der Strebe innerhalb des Kanals eingeschränkt wird.

Bevorzugt weist die Vorrichtung eine Abdeckung zur Abdeckung des Kanals auf. Über die Abdeckung können die Kanalöffnung und ggf. in dem Bereich der Kanalöffnung anordnete Elemente, wie beispielsweise ein Dichtelement, gegen mechanische Beanspruchungen geschützt werden.

Bei einem militärischen Fahrzeug mit einer die Fahrzeugbesatzung aufnehmenden Wanne und zwei seitlich der Wanne angeordneten Fahrwerksteilen trägt es zur **Lösung** der Aufgabe bei, wenn eine vorstehend beschriebene Vorrichtung zum Verbinden der Fahrwerksteile an dem Fahrzeug vorgesehen wird.

Es ergeben sich dieselben Vorteile, wie sie bereits im Zusammenhang mit der Vorrichtung zum Verbinden zweier Fahrwerksteile beschrieben wurden.

Bei dem Fahrzeug können gleichfalls die vorstehend beschriebenen vorteilhaften Merkmale der Vorrichtung allein oder in Kombination Anwendung finden.

Weitere Vorteile und Einzelheiten der Erfindung sollen nachfolgend anhand eines in den Figuren dargestellten Ausführungsbeispiels erläutert werden. Darin zeigen:
- Fig. 1: ein militärisches Fahrzeug in einer stark schematisierten Schnittdarstellung entlang einer vertikalen Schnittebene in Fahrzeugquerrichtung,
- Fig. 2: mehrere Vorrichtungen zum Verbinden zweier Fahrwerksteile in einer schematischen Schnittdarstellung entlang einer vertikalen Schnittebene in Fahrzeuglängsrichtung,
- Fig. 3: eine Vorrichtung gemäß Fig. 2 in einer schematischen Schnittdarstellung entlang einer vertikalen Schnittebene in Fahrzeugquerrichtung und
- Fig. 4: eine Vorrichtung gemäß Fig. 2 in einer schematischen Schnittdarstellung entlang einer horizontalen Schnittebene.

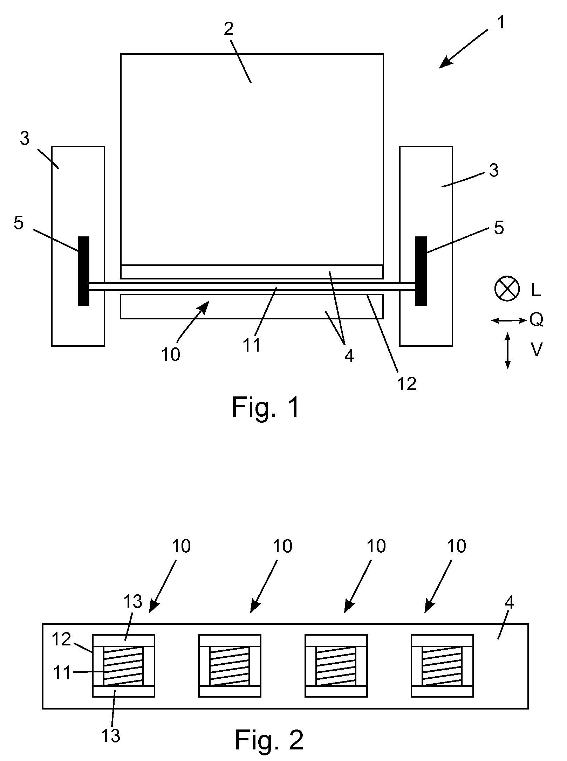

In Fig. 1 ist ein als Schützenpanzer ausgebildetes militärisches Fahrzeug 1 schematisch dargestellt, welches eine gepanzerte Wanne 2 zur Aufnahme der Fahrzeugbesatzung sowie ein Fahrwerk mit zwei seitlich der Wanne angeordneten Fahrwerksteilen 3 aufweist. Die Fahrwerksteile 3 werden bei dem Ausführungsbeispiel von zwei Kettenlaufwerken 3 gebildet, die gegenüber der Wanne 2 schwingungsentkoppelt montiert sind.

Die Kettenlaufwerke 3 sind links und rechts der Wanne 2 angeordnet und weisen in Fahrzeuglängsrichtung L verlaufende Laufwerksträger 5 auf, an welchen die Antriebs-, Umlenk- und Laufrollen der Kettenlaufwerke 3 angebunden sind. Die Laufwerksträger 5 sind über nicht dargestellte Schwingungsentkopplungselemente mit der Wanne 2 verbunden. Unterhalb der Wanne 2 ist ein mit der Wanne 2 verbundener Minenschutz 4 angeordnet, über welchen die Wanne 2 gegen von unten einwirkende Wirkmittel geschützt wird, insbesondere gegen Minen.

Um die Steifigkeit des Fahrzeugs 1, beispielsweise bei Kurvenfahrt zu erhöhen, weist das Fahrzeug 1 mehrere über die Fahrzeuglänge verteilt angeordnete Vorrichtungen 10 zum Verbinden der beiden Kettenlaufwerke 3 auf, über welche die beiden Kettenlaufwerke 3 in konstantem Abstand zueinander gehalten werden und welche im Folgenden beschrieben werden sollen.

Die Verbindungsvorrichtungen 10 weisen jeweils einen beidseitig offenen Kanal 12 auf, welcher innerhalb des Minenschutzes 4 in Fahrzeugquerrichtung Q verläuft. Alternativ können die Kanäle 12 durch den unteren Bereich der Wanne 2 geführt werden. Innerhalb jedes Kanals 12 ist eine gegenüber dem wannenfesten, d.h. gegenüber der Wanne 2 nicht bewegbaren, Kanal 12 bewegbare Strebe 11 vorgesehen, welche die beiden Kettenlaufwerke 3 zug- und druckfest miteinander verbindet. Hierzu ist die Strebe 11 an dem rechten Laufwerksträger 5 und an dem linken Laufwerksträger 5 angebunden. Die Strebe 11 besteht bevorzugt aus einem metallischen Material.

In Fig. 2 sind schematisch vier Vorrichtungen 10 mit jeweils einem Kanal 12 mit rechteckigem Querschnitt dargestellt, in welchen jeweils eine Strebe 11 mit rechteckigem Querschnitt angeordnet ist. Bei der Fahrt kommt es aufgrund der schwingungsentkoppelten Verbindung von Wanne 2 bzw. Minenschutz 4 und dem Fahrwerk zu Bewegungen der Streben 11 sowohl in Fahrzeuglängsrichtung L als auch in Fahrzeugquerrichtung Q und entlang einer vertikalen Richtung V. Um diesen Bewegungen der Streben 11 Raum zu geben, weisen die Kanäle 12 einen größeren Querschnitt als die Streben 11 auf.

Allerdings besteht die Gefahr, dass in den Bereich zwischen den Streben 11 und der Innenseite 12.5 des Kanals 12 Verschmutzungen eindringen. Diese können den Kanal 12 derart verstopfen, dass Bewegungen der Strebe 11 behindert werden und die Strebe 11 dadurch Schaden nehmen kann. Um zu verhindern, dass die Bewegungen der Strebe 11 innerhalb des Kanals 12 durch von außen bis tief in das Innere des Kanals 12 eindringende Verschmutzungen beeinträchtigt werden, sind mehrere, innerhalb jedes Kanals 12 angeordnete Abstreifer 13 zum Abstreifen von Verschmutzungen von der Strebe 11 vorgesehen. Die Abstreifer 13 wirken mit der Strebe 11 derart zusammen, dass bei Relativbewegungen der Strebe 11 gegenüber den Abstreifern 13 Verschmutzungen von der Strebe 11 abgestreift werden.

Wie der Darstellung in Fig. 2 ferner zu entnehmen ist, ist ein erster Abstreifer 13 oberhalb und ein zweiter Abstreifer 13 unterhalb der Strebe 11 angeordnet. Beide Abstreifer 13 sind zwischen der Innenseite 12.5 des Kanals 12 und der Strebe 11 angeordnet. Die Abstreifer 13 sind jeweils an der Innenseite 12.5 des Kanals 12 festgelegt und liegen an der gegenüber den Abstreifern 13 nach Art eines Rakels beweglichen Strebe 11 an. Zwischen den Abstreifern 13 ist eine Durchführung zur Durchführung der Strebe 11 vorgesehen. Bei Bewegungen der Strebe 11 streifen die Abstreifer 13 über die Oberfläche der Strebe 11 und entfernen dabei Verschmutzungen von der Strebe 11.

Die Abstreifer 13 bestehen aus einem elastischen Material, beispielsweise aus Gummi, und sind gegen die Oberfläche der Strebe 11 elastisch vorgespannt.

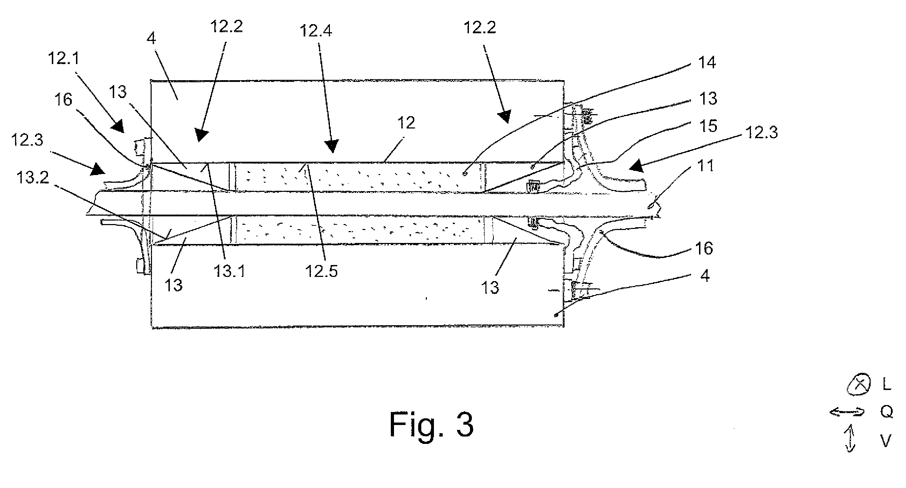

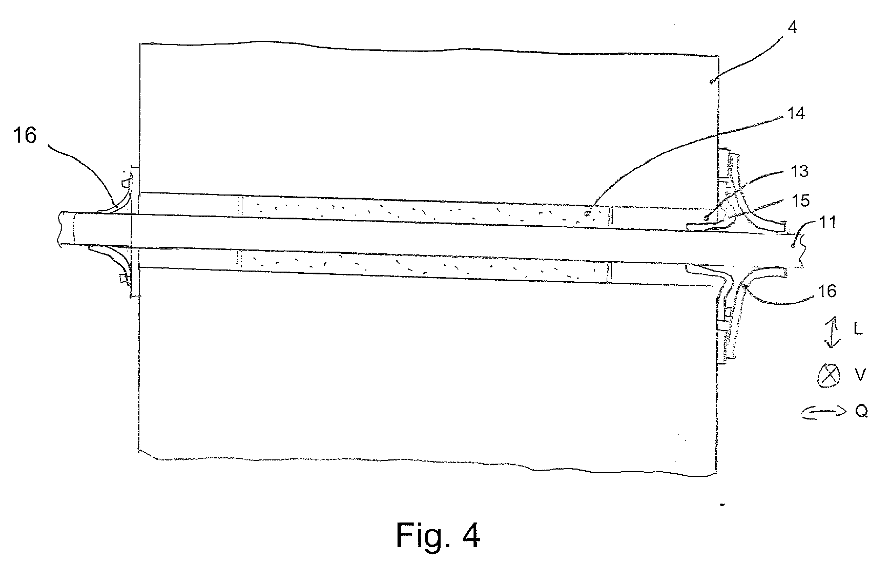

Wie der Darstellung in den Fig. 3 und der Fig. 4 entnommen werden kann, sind die Abstreifer 13 vollständig in den Endbereichen 12.2 des Kanals 12, also nahe den Kanalöffnungen 12.3 angeordnet. In dem zwischen den Endbereichen 12.2 liegenden Mittelbereich 12.4 ist ein Füllstoff 14 eingebracht, welcher den Raum zwischen den endseitig angeordneten Abstreifern 13 ausfüllt. Der Füllstoff 14 ist elastisch und kann wahlweise aus demselben Material wie die Abstreifer 13 ausgebildet sein. Aus Gewichtsgründen bevorzugt ist jedoch ein geschlossenporiger Schaumstoff.

Die Abstreifer 13 sind keilförmig ausgebildet. Die keilförmigen Abstreifer 13 weisen insgesamt einen dreieckigen Querschnitt auf. Bevorzugt ist der Querschnitt der Abstreifer 13 nach Art eines rechtwinkligen Dreiecks ausgebildet.

Die Abstreifer 13 sind innerhalb des Kanals 12 derart angeordnet, dass sie mit einer Kontaktfläche 13.1 an der Innenseite 12.5 des Kanals 12 anliegen und eine schräg zu der Innenseite 12.5 des Kanals 12 verlaufende Keilfläche 13.2 der Strebe 11 zugewandt ist. Die Keilfläche 13.2 ist in Richtung der Kanalöffnung 12.3 abfallend ausgerichtet.

Bei der Vorrichtung 10 bilden jeweils zwei Abstreifer 13, die gemeinsam in demselben Endbereich 12.2 angeordnet sind, einen Trichter, der sich zu der jeweiligen Kanalöffnung 12.3 hin öffnet. Durch die trichterartige Anordnung der Abstreifer 13 wird zwischen den Abstreifern 13 und der Kanalöffnung 12.3 ein Freiraum gebildet, in welchem an die Strebe 11 angreifende Elemente angeordnet werden können und sich etwaige Verunreinigungen sammeln können. Der Freiraum wird durch die Kanalöffnung 12.3 sowie die Keilfläche 13.2 der beiden Abstreifer 13 begrenzt und befindet sich im Endbereich 12.2 des Kanals 12.

In dem Endbereich 12.2, welcher in den Fig. 3 und 4 auf der rechten Seite dargestellt ist, ist zusätzlich zu den Abstreifern 13 ein Dichtelement 15 dargestellt, über welches eine endseitige Abdichtung des Kanals 12 erreicht wird. Das Dichtelement 15 ist teilweise in dem Freiraum zwischen den Abstreifern 13 und der Kanalöffnung 12.3 angeordnet. Das Dichtelement 15 ist als Balgabdichtung, insbesondere als Faltenbalg, ausgebildet. Ein Ende des Dichtelements 15 greift an der Strebe 11 im Bereich des Freiraums zwischen Abstreifern 13 und Kanalöffnung 12.3 an. Das andere Ende des Dichtelements 15 ist an der Stirnseite 12.1 des Kanals 12 über Befestigungselemente 17 angebunden. Über das Dichtelement 15 können grobe Verschmutzungen von dem Mittelbereich 12.4 des Kanals 12 ferngehalten werden. Kleine Schmutzartikel können jedoch den Verbindungsbereich von Strebe 11 und Dichtelement 15 durchdringen und an der Strebe 11 anhaften. Diese Verschmutzungen können bei Bewegung der Strebe 11 gegenüber dem Abstreifer 13 von der Strebe 11 entfernt werden. Die Verschmutzungen wandern entlang der Keilflächen 13.2 der Abstreifer 13 in Richtung des Dichtelements 15 und sammeln sich in dem Bereich zwischen den Abstreifern 13 und dem Dichtelement 15 an. Im Rahmen von Wartungsarbeiten können diese Verschmutzungen mit geringem Aufwand entfernt werden, ohne das es erforderlich wäre, die Strebe 11 aus dem Kanal 12 zu entnehmen.

In dem auf der linken Seite in Fig. 3 und 4 dargestellten Endbereich 12.2 ist kein Dichtelement 15 vorgesehen. Allerdings ist an der Stirnseite 12.1 des Kanals 12 eine flexible Abdeckung 16 zu Abdeckung des Kanals 12 angeordnet.

Diese Abdeckung verschließt den Kanal 12 nicht dichtend, so dass durch die innerhalb des Kanals 12 angeordneten Abstreifer 13 abgestreiftes Material zwischen Strebe 11 und Abdeckung 16 nach außen entweichen kann.

Das vorstehend beschriebene Fahrzeug 1 weist neben einer die Fahrzeugbesatzung aufnehmenden Wanne 2 und zwei seitlich der Wanne 2 angeordneten Fahrwerksteilen 3 eine Vorrichtung 10 zum Verbinden zweier Fahrwerksteile 3 mit einer in einem beidseitig offenen Kanal 12 bewegbar angeordneten Strebe 11 auf, wobei innerhalb des Kanals 12 ein Abstreifer 13 zum Abstreifen von Verschmutzungen von der Strebe 11 vorgesehen ist. Die Vorrichtung 10 zeichnet sich durch den wartungsfreundlichen Aufbau aus.

### Bezugszeichen:

- 1: Fahrzeug
- 2: Wanne
- 3: Fahrwerksteil, Kettenlaufwerk
- 4: Minenschutz
- 5: Laufwerksträger

- 10: Vorrichtung
- 11: Strebe
- 12: Kanal
- 12.1: Stirnseite
- 12.2: Endbereich
- 12.3: Kanalöffnung
- 12.4: Mittelbereich
- 12.5: Innenseite
- 13: Abstreifer
- 13.1: Kontaktfläche
- 13.2: Keilfläche
- 14: Füllstoff
- 15: Faltenbalg
- 16: Abdeckung
- 17: Befestigungselement
- 18: Freiraum

- L: Fahrzeuglängsrichtung
- Q: Fahrzeugquerrichtung
- V: vertikale Richtung

## Patentansprüche

1. Vorrichtung zum Verbinden zweier Fahrwerksteile (3), insbesondere zweier Kettenlaufwerke, mit einer in einem beidseitig offenen Kanal (12) bewegbar angeordneten Strebe (11), **gekennzeichnet durch**
einen zumindest teilweise innerhalb des Kanals (12) angeordneten Abstreifer (13) zum Abstreifen von Verschmutzungen von der Strebe (11).

2. Vorrichtung nach Anspruch 1, **dadurch gekennzeichnet, dass** der Abstreifer (13) in einem Endbereich (12.2) des Kanals (12) angeordnet ist.

3. Vorrichtung nach einem der vorhergehenden Ansprüche, **dadurch gekennzeichnet, dass** der Abstreifer (13) aus einem elastischen Material besteht.

4. Vorrichtung nach einem der vorhergehenden Ansprüche, **gekennzeichnet durch** mindestens einen weiteren Abstreifer (13).

5. Vorrichtung nach Anspruch 4, **dadurch gekennzeichnet, dass** die Abstreifer (13) in gegenüberliegenden Endbereichen (12.2) des Kanals (12) angeordnet sind.

6. Vorrichtung nach Anspruch 5, **dadurch gekennzeichnet, dass** zwischen den Abstreifern (13) ein Füllstoff (14) angeordnet ist.

7. Vorrichtung nach einem der Ansprüche 4 bis 6, **dadurch gekennzeichnet, dass** ein Abstreifer (13) oberhalb der Strebe (11) und ein Abstreifer (13) unterhalb der Strebe (11) angeordnet ist.

8. Vorrichtung nach einem der vorhergehenden Ansprüche, **dadurch gekennzeichnet, dass** zwischen dem Abstreifer (13) und der Strebe (11) ein sich zu einer Kanalöffnung (12.3) hin öffnender Freiraum (18) vorgesehen ist.

9. Vorrichtung nach einem der vorhergehenden Ansprüche, **dadurch gekennzeichnet, dass** ein Abstreifer (13) oder mehrere Abstreifer (13) gemeinsam einen sich zu einer Kanalöffnung (12.3) hin öffnenden Trichter bilden.

10. Vorrichtung nach einem der vorhergehenden Ansprüche, **dadurch gekennzeichnet, dass** ein Abstreifer (13) oder mehrere Abstreifer (13) keilförmig ausgebildet sind.

11. Vorrichtung nach Anspruch 10, **dadurch gekennzeichnet, dass** der Abstreifer (13) den Querschnitt eines rechtwinkligen Dreiecks aufweist.

12. Vorrichtung nach einem der Ansprüche 1 bis 9, **dadurch gekennzeichnet, dass** die Strebe (11) durch eine Öffnung des die Strebe (11) umschließenden Abstreifers (13) hindurch geführt ist.

13. Vorrichtung nach einem der vorhergehenden Ansprüche, **gekennzeichnet durch** ein dem Abstreifer (13) vorgeschaltetes Dichtelement (15), insbesondere eine Balgabdichtung, zur Abdichtung des Kanals (12).

14. Vorrichtung nach Anspruch 8 und 13, **dadurch gekennzeichnet, dass** ein Ende des Dichtelements (15) an einer Stirnseite (12.1) des Kanals (12) und ein anderes Ende des Dichtelements (15) an der Strebe (11) in dem Freiraum (18) angeordnet ist.

15. Militärisches Fahrzeug mit einer die Fahrzeugbesatzung aufnehmenden Wanne (2) und zwei seitlich der Wanne (2) angeordneten Fahrwerksteilen (3), **gekennzeichnet durch** eine Vorrichtung (10) nach einem der vorhergehenden Ansprüche.

## Claims

1. Apparatus for connecting two chassis parts (3), in particular two track drives, having a strut (11) which is arranged such that it can be moved in a channel (12) which is open on both sides, **characterized by** a wiper (13) which is arranged at least partially within the channel (12) for wiping contaminants from the strut (11).

2. Apparatus according to Claim 1, **characterized in that** the wiper (13) is arranged in an end region (12.2) of the channel (12).

3. Apparatus according to either of the preceding claims, **characterized in that** the wiper (13) consists of an elastic material.

4. Apparatus according to one of the preceding claims, **characterized by** at least one further wiper (13).

5. Apparatus according to Claim 4, **characterized in that** the wipers (13) are arranged in opposite end regions (12.2) of the channel (12).

6. Apparatus according to Claim 5, **characterized in that** a filler material (14) is arranged between the wipers (13).

7. Apparatus according to one of Claims 4 to 6, **characterized in that** one wiper (13) is arranged above the strut (11) and one wiper (13) is arranged below the strut (11).

8. Apparatus according to one of the preceding claims, **characterized in that** a clearance (18) which opens towards a channel opening (12.3) is provided between the wiper (13) and the strut (11).

9. Apparatus according to one of the preceding claims, **characterized in that** a wiper (13) forms, or a plurality of wipers (13) together form, a funnel which opens towards a channel opening (12.3).

10. Apparatus according to one of the preceding claims, **characterized in that** a wiper (13) or a plurality of wipers (13) is/are of wedge-shaped configuration.

11. Apparatus according to Claim 10, **characterized in that** the wiper (13) has the cross section of a right-angled triangle.

12. Apparatus according to one of Claims 1 to 9, **characterized in that** the strut (11) is guided through an opening of the wiper (13) which encloses the strut (11).

13. Apparatus according to one of the preceding claims, **characterized by** a sealing element (15), in particular a bellows seal, which is connected ahead of the wiper (13) in order to seal the channel (12).

14. Apparatus according to Claims 8 and 13, **characterized in that** one end of the sealing element (15) is arranged on an end side (12.1) of the channel (12) and another end of the sealing element (15) is arranged on the strut (11) in the clearance (18).

15. Military vehicle having a hull (2) which accommodates the vehicle crew and two chassis parts (3) which are arranged on the sides of the hull (2), **characterized by** an apparatus (10) according to one of the preceding claims.

## Revendications

1. Dispositif servant à relier deux parties de train de roulement (3), en particulier deux trains de roulement à chenilles, comprenant une entretoise (11) disposée de manière à pouvoir être déplacée dans un canal (12) ouvert des deux côtés,
**caractérisé par**
un racloir (13) disposé au moins en partie à l'intérieur du canal (12), servant à retirer, par raclage de l'entretoise (11), des saletés.

2. Dispositif selon la revendication 1, **caractérisé en ce que** le racloir (13) est disposé dans une zone d'extrémité (12.2) du canal (12).

3. Dispositif selon l'une quelconque des revendications précédentes, **caractérisé en ce que** le racloir (13) est constitué d'un matériau élastique.

4. Dispositif selon l'une quelconque des revendications précédentes, **caractérisé par** au moins un autre racloir (13).

5. Dispositif selon la revendication 4, **caractérisé en ce que** les racloirs (13) sont disposés dans des zones d'extrémité (12.2) du canal (12) se faisant face.

6. Dispositif selon la revendication 5, **caractérisé en ce qu'**une charge (14) est disposée entre les racloirs (13).

7. Dispositif selon l'une quelconque des revendications 4 à 6, **caractérisé en ce qu'**un racloir (13) est disposé au-dessus de l'entretoise (11) et qu'un racloir (13) est disposé sous l'entretoise (11).

8. Dispositif selon l'une quelconque des revendications précédentes, **caractérisé en ce qu'**un espace libre (18) s'ouvrant en direction d'une ouverture de canal (12.3) est prévu entre le racloir (13) et l'entretoise (11).

9. Dispositif selon l'une quelconque des revendications précédentes, **caractérisé en ce qu'**un racloir (13) ou plusieurs racloirs (13) forment conjointement un entonnoir s'ouvrant en direction d'une ouverture de canal (12.3).

10. Dispositif selon l'une quelconque des revendications précédentes, **caractérisé en ce qu'**un racloir (13) ou plusieurs racloirs (13) sont réalisés de manière à présenter une forme de coin.

11. Dispositif selon la revendication 10, **caractérisé en ce que** le racloir (13) présente la section transversale d'un triangle rectangle.

12. Dispositif selon l'une quelconque des revendications 1 à 9, **caractérisé en ce que** l'entretoise (11) est guidée à travers une ouverture du racloir (13) renfermant l'entretoise (11).

13. Dispositif selon l'une quelconque des revendications précédentes, **caractérisé par** un élément étanche (15) installé en amont du racloir (13), en particulier un soufflet d'étanchéité, servant à étanchéifier le canal (12).

14. Dispositif selon la revendication 8 et 13, **caractérisé en ce qu'**une extrémité de l'élément étanche (15) est disposée au niveau d'un côté frontal (12.1) du canal (12), et **en ce qu'**une autre extrémité de l'élément étanche (15) est disposée au niveau de l'entretoise (11) dans l'espace libre (18).

15. Véhicule militaire comprenant une coque (2) recevant l'équipage et deux parties de train de roulement (3) disposées à côté de la coque (2), **caractérisé par** un dispositif (10) selon l'une quelconque des revendications précédentes.
